# EUROPÄISCHE PATENTSCHRIFT

(11) **EP 2 936 085 B1**
(45) Veröffentlichungstag und Bekanntmachung des Hinweises auf die Patenterteilung: **30.12.2020**
(21) Anmeldenummer: 13795263.6
(22) Anmeldetag: 25.11.2013
(51) Int. Cl.: G01F 25/00, G01F 1/32

(54) **WIRBELSTRÖMUNGSMESSGERÄT UND VERFAHREN ZUR MESSUNG DER QUALITÄT VON PROZESS- UND EINBAUBEDINGUNGEN**
VORTEX FLOW METER AND METHOD FOR MEASURING THE QUALITY OF PROCESS AND INSTALLATION CONDITIONS
DÉBITMÈTRE A VORTEX ET PROCEDE DE MESURE DE LA QUALITÉ DES PROCÉDÉ ET DES CONDITIONS D'INSTALLATION

(30) Priorität: 20.12.2012 DE 102012112800
(43) Veröffentlichungstag der Anmeldung: 28.10.2015
(73) Patentinhaber: Endress+Hauser Flowtec AG, 4153 Reinach (BL) (CH)
(72) Erfinder: HOLLMACH, Marc, CH-4056 Basel (CH); VITALI, Roberto, CH-4058 Basel (CH); SÜTTERLIN, Dirk, 79650 Schopfheim (DE)
(74) Vertreter: Andres, Angelika Maria
(86) Internationale Anmeldenummer: PCT/EP2013/074631
(87) Internationale Veröffentlichungsnummer: WO 2014/095246

(56) Entgegenhaltungen:
- WO-A1-2009/038803
- JP-A- 2011 232 201
- US-A1- 2011 184 701

## Beschreibung

Die Erfindung betrifft ein Wirbelströmungsmessgerät sowie ein Verfahren zur Messung der Qualität von Prozess- und Einbaubedingungen eines solchen Wirbelströmungsmessgeräts.

Aus dem Stand der Technik sind für die Durchflussmessung fluider Medien in Rohrleitungen verschiedene Messgeräte bekannt. Die Strömungen in den Rohrleitungen umfassen ein- oder mehrphasige Medien. Diese Art von Strömungen können mit Wirbelströmungsmessgeräten, die auf dem Prinzip der Kärmän'schen Wirbelstraße basieren, gemessen werden.

Die DE 10 2009 001 526 A1 beschreibt ein solches Wirbelströmungsmessgerät mit einem in eine Rohrleitung eingebautem Messrohr. Ferner sind in das Messrohr ein Staukörper, welcher in der Strömung steht, und ein im oder in Strömungsrichtung nach dem Staukörper befindlicher Wirbelsensor, der auf die auftretenden Druckschwankungen anspricht, eingelassen.

Die DE 10 2009 001 525 A1 beschreibt ein Verfahren zum Überwachen bzw. Messen eines vorgenannten Mediums, wobei Kärmän'sche Wirbel im strömenden Medium erzeugt werden. Die Wirbel lösen sich mit einer Wirbelablösefrequenz (auch Vortexfrequenz genannt), die von einer momentanen Strömungsgeschwindigkeit des strömenden Mediums abhängt, vom Staukörper ab. Die durch die Wirbel erzeugten Druckschwankungen werden vom Wirbelsensor erfasst. Mit Hilfe der Wirbelablösefrequenz kann der Volumenstrom bestimmt werden.

Wirbelströmungsmessgeräte als hochsensitive Messgeräte in ihrer Messqualität sind nicht nur abhängig von ihrem inneren Aufbau, sondern stets auch abhängig von äußeren Prozessbedingungen sowie ihrer Einbausituation in einem bestehenden System. Äußere Prozessbedingungen können bspw. Vibrationen der umgebenden Anlage oder Durchflussstörungen des verwendeten Mediums sein. Treten derartige Störungen auf, erhöht sich die Messunsicherheit des betreffenden Geräts, wodurch die erforderlichen Messgenauigkeiten, die diese Geräte gewährleisten sollen, vermindert werden.

Auch eine unzulässige Einbausituation, so die Nichteinhaltung des Mindestmasses gerader Rohrlänge vor dem Messgerät oder eine ungenügende Ausrichtung des Messgeräts zur Rohrleitungsachse, können dazu führen, dass vorgegebene Spezifikationen zu einer Messunsicherheit des Wirbelströmungsmessgeräts nicht eingehalten werden. Dies kann die gesamte Messung des Volumenstroms oder daraus abgeleiteter Messgrössen beeinflussen, so dass die Messung als solche gestört wird und ein unzulässig hoher Messfehler des Wirbelströmungsmessgeräts entsteht.

Es sind verschiedene Möglichkeiten bekannt, wie eine schlechte Einbaulage direkt bei Einbau des Messgeräts in die bestehende Anlage erkannt werden kann. Dazu sind verschiedenste Qualitätsparameter bekannt, die Aussagen darüber geben können, ob das Messgerät richtig eingebaut wird. Ein solcher Qualitätsparameter kann bspw. ein Abstand sein, den das Messgerät zu einem Krümmer stromauf aufweist.

Nachteilig ist jedoch, dass die vorstehenden Qualitätsparameter manuell überprüft werden müssen und falls sie nicht überprüft werden, zu unentdeckten Messfehlern führen. DE 10 2004 031 637 beschreibt ein Verfahren zum Betrieb einer Messeinrichtung, zum Beispiel einer Wirbeldurchflussmesseinrichtung, wobei der Einbauzustand durch die Sensoren selbst, dass heißt durch Ertastung eines entsprechenden Sensorwertes erfasst und mit Kenndaten verglichen wird, und das Vergleichsergebnis sodann elektronisch ausgewertet und automatisch abgeschätzt wird ob die aktuell erhaltenen Kenndaten mit den Vergleichsdaten zumindest innerhalb einer gegebenen Toleranz übereinstimmen. Signalsignaturen können beispielsweise gewonnen werden aus Spektren oder daraus abgeleiteten Größen, aus charakteristischen Größen von Zeitreihen, zum Beispiel mittels Methoden der Chaostheorie, oder aus statistischen Größen.

Ausgehend von diesem Stand der Technik ist es Aufgabe der vorliegenden Erfindung, ein Verfahren zur Messung der Qualität von Prozess- und Einbaubedingungen zu schaffen, das ein Maß für die Beeinflussung von Prozess- und Installationsbedingungen eines Wirbelströmungsmessgeräts bereitstellt, wodurch äußere Störungen schnell und einfach festgestellt werden können.

Diese Aufgabe wird durch ein Verfahren mit den Merkmalen des unabhängigen Anspruchs 1 gelöst.

Ferner wird die weitere Aufgabe, ein Wirbelströmungsmessgerät bereitzustellen, mit welchem eine Aussage über die Prozess- und Einbauqualität getroffen werden kann, durch ein Wirbelströmungsmessgerät mit den Merkmalen des unabhängigen Anspruchs 5 gelöst.

Bevorzugte Ausführungsformen werden durch die Unteransprüche beschrieben.

Eine erfindungsgemäße Ausführungsform bezieht sich auf ein Verfahren zur Messung der Qualität von Prozess- und Einbaubedingungen eines Wirbelströmungsmessgeräts, in dem ein zumindest einphasiges Medium strömt, das einen in das strömende Medium hineinragenden Staukörper und einen, insbesondere stromab oder innerhalb des Staukörpers platzierten, Wirbelsensor aufweist.

In einem ersten Schritt strömt das zumindest einphasige Medium durch das Wirbelströmungsmessgerät. Dabei werden durch die Kärmän'sche Wirbelstrasse mittels des Staukörpers Wirbel im strömenden Medium erzeugt zumindest im Bereich des Wirbelsensors, wobei die Wirbel mit einer von einer momentanen Strömungsgeschwindigkeit des strömenden Mediums abhängigen Wirbelablösefrequenz (fᵥ) vom Staukörper abgelöst werden.

In einem weiteren Schritt werden die durch die Kärmän'schen Wirbel im strömenden Medium verursachten periodischen Druckschwankungen mit dem Wirbelsensor erfasst und ein mit den Druckschwankungen korrespondierendes Sensorsignals (S) erzeugt.

In einem weiteren Schritt wird eine Nutzsignalkomponente (M) aus dem Sensorsignal S, die ein, die Wirbelablösefrequenz enthaltendes Frequenzband aufweist, durch eine Datenverarbeitungseinheit selektiert.

Hiernach erfolgt durch die Datenverarbeitungseinheit in einem weiteren Schritt ein statistisches Auswerten der Nutzsignalkomponente, wobei ein mit den Einbaubedingungen korrelierter Qualitätsparameter bestimmt wird.

Danach wird der bestimmte Qualitätsparameter mit einem vorbestimmten Wertebereich des Qualitätsparameters verglichen, und schließlich wird in einem weiteren Schritt mittels an die Datenverarbeitungseinheit angeschlossene Anzeige- und/oder Ausgabeeinheit eine elektrische, akustische und/oder optische Meldung ausgegeben, falls ein Wert des Qualitätsparameters innerhalb oder außerhalb des vorbestimmten Wertebereichs liegt.

Der Qualitätsparameter kann dem Anwender als Diagnoseausgabeparameter in Form eines skalierten Signals über die Ausgabe- oder Anzeigeeinheit zur Verfügung gestellt werden und ihm hierbei ein Maß für die derzeitige Messunsicherheit dienen.

Vorteilhaft kann allein aus dem Messsignal des Sensors das Vorliegen einer Störung und deren Stärke erkannt werden.

Als ein geeignetes Signal zur Auswertung eines Qualitätsparameters hat sich herausgestellt, dass insbesondere ein um die Wirbelablösefrequenz herum schmalbandig aus dem Sensorsignal S mittels eines dafür geeigneten Filters selektierter Frequenzbereich als Nutzsignalkomponente M herangezogen werden kann, wobei eine relative Bandbreite weniger betragen kann als 50 % einer Mittenfrequenz, die der Wirbelablösefrequenz entspricht. Es sind jedoch auch Anpassungen an die Bandbreite je nach Anforderung an die zu verwendende Nutzsignalkomponente möglich. Mittels dieser selektiven Filterung können nur Frequenzbereiche im Bereich um die Wirbelablösefrequenz herum berücksichtigt werden, womit Störanteile mit Frequenzen ausgefiltert werden können, die sich von der Wirbelablösefrequenz unterscheiden.

Zur Bestimmung des Qualitätsparameters ist es notwendig, dass eine statistische Auswertung der Nutzsignalkomponente erfolgt. Wie aus den Stand der Technik bekannt ist, ist die Messunsicherheit eines Messwerts mit der Schwankungsgrösse desselben verknüpft. Um die Qualität eines Staukörpers eines Wirbelströmungsmessgeräts zu überwachen kann die Schwankungsgröße, d. h. die relative Standardabweichung, der gemessenen Frequenzen als Maß dafür dienen. Auch kann die Signalamplitude, die bei gegebenem Durchfluss erreicht wird, ein Kriterium für die Qualität des Staukörpers sein.

Die statistischen Methoden, die zur Anwendung kommen, bewerten die Symmetrie einer Verteilung, deren Breite und deren Form. Die Verteilung bemisst sich aus dem Vergleich von Mittelwert und Median Standardabweichung und Mittelwert sowie der Schiefe und Steilheit des Messsignals. Die dafür zugrundeliegenden statistischen Auswertemethoden sind dem Fachmann aus dem Stand der Technik bekannt, wie sie auch in der DE 10 2009 001 525 A1 oder der DE 10 2009 001 526 A1 beschrieben werden.

Erfindungsgemäß kann dazu vorgesehen sein, dass beim statistischen Auswerten der Nutzsignalkomponente über ein Zeitintervall der Qualitätsparameter eine relative Standardabweichung σ oder eine Kurtosis (Ku) derselben ist.

Des Weiteren sieht die Erfindung bevorzugt vor, dass die statistische Auswertung der aus der Nutzsignalkomponente bestimmten Wirbelablöseperioden über ein Zeitintervall, insbesondere die Bestimmung einer relativen Standardabweichung oder einer Kurtosis, umfasst. Diese Größen bilden eine einfache und schnelle Möglichkeit, Messunsicherheiten abzuschätzen.

Mit diesen statistischen Auswertungsmethoden können dabei sowohl das Messsignal bzw. die daraus selektierte Nutzsignalkomponente selbst, wie auch aus ihm gewonnene Frequenzen bzw. Periodendauern der einzelnen Wirbel untersucht werden.

Um die Periodendauer eines Wirbels zu bestimmen, kann die Nutzsignalkomponente des Messsignals mit einer Grenzfrequenz unterhalb der ersten hochfrequenten Störsignals mittels eines Tiefpassfilters gefiltert werden. Die Periodendauer der einzelnen Wirbel können hierbei aus der zeitlichen Differenz zwischen zwei Nulldurchgängen oder zwei Extrema des Signals berechnet werden. Durch Differenzieren der gefilterten Nutzsignalkomponente und der Bestimmung der Zeitpunkte der Nulldurchgänge erhält man die Zeitwerte dieser Extrema.

Wird nun die Verteilung der Periodendauer eines störungsfreien Messsignals, d. h. eines ordnungsgemäß eingebauten bzw. ohne Störungen betriebenen Wirbelströmungsmessgeräts betrachtet, kann sich ein typischer Wert für die relative Standardabweichung bzw. der Kurtosis dieser Periodendauer sowie eine symmetrische Verteilung derselben ergeben. In diesem Fall ist eine Schiefe gleich Null und ein Mittelwert entspricht dem Median. Der Median oder auch Zentralwert genannt ist dabei der Mittelwert der Verteilungen, wonach eine Anzahl von Werten oder eine Verteilung in zwei Hälften geteilt wird. Die Form der Verteilung der Periodendauern entspricht in diesem Falle etwa einer Gaussverteilung. Je stärker die gemessene Werte eines Messsignals von dieser Verteilung nun abweichen, desto größer kann folglich die Störung des Wirbelströmungsmessgeräts sein.

Eine Verteilung eines ungestörten Messsignals bzw. Nutzsignalkomponente kann in einer guten Näherung der eines Sinussignals entsprechen, wobei der Sinus hierbei symmetrisch ist. Dessen Verteilungsform kann eine Kurtosis von in etwa 1,5 aufweisen. Je weiter entfernt ein gemessenes Messsignal im Vergleich zu diesem ungestörten Messsignal ist, desto größer ist wiederum die vorhandene Störung des Messgeräts. Vorteilhaft wird mittels eines einzigen Werts ermöglicht, über eine mögliche Störung qualifiziert auszusagen.

Es kann dabei vorgesehen sein, dass der zum Vergleich herangezogene Wertebereich des Qualitätsparameters, bevorzugt für die Kurtosis in einem Bereich von 1,4 bis 5, bevorzugt von 1,5 bis 3 liegen kann. Dieser Wertebereich beinhaltet die beschriebene Näherung des ungestörten Messsignals und kann in einer Weiterbildung der Erfindung in unterschiedliche Kategorien geteilt werden. Der Wertebereich des Qualitätsparameters kann bspw. in eine Vielzahl an abstufende Kategorien unterteilt werden, wobei der Wert des Qualitätsparameters in einer Kategorie "sehr gut" in einem Bereich von 1,5 bis 1,6 oder "gut" in einem Bereich von 1,5 bis 1,5 oder von 1,6 bis 1,8 liegen kann. Ferner kann eine Kategorie "schlecht" in einem Bereich von 1 bis 1,45 bzw. von 1,8 bis 4 liegen. In einer Weiterbildung der Erfindung kann vorgesehen sein, dass eine Kategorie "sehr schlecht" außerhalb des Wertebereichs liegen kann. Gerade bei diesen Werten ist eine Messung gemäß der Messspezifikationen des Geräts nahezu nicht mehr möglich, da der vorherrschende Messfehler durch die äußeren Prozessbedingungen zu groß geworden ist.

Die einzelnen Abstufungen können jedoch je nach Anwendung des Messgeräts angepasst werden, so dass die Kategorien z.B. strenge oder weniger strenge Bewertungen sind. Je nachdem, welchen Wert die Kurtosis zeigt, kann der Wert einer Kategorie zugeordnet werden. Die entsprechende Kategorie kann damit Auskunft darüber geben, wie gut oder wie schlecht die äußeren Prozess- oder Einbaubedingungen für das Messgerät sind. Damit kann schnell und einfach erkannt werden, wie es um die derzeitige Einbausituation bzw. Prozessbedingungen bestellt ist.

Alternativ kann die Erfindung vorsehen, dass die Kategorien in unterschiedlichen prozentualen Abstufungen unterteilt werden, wobei eine Angabe zwischen "gut" und "schlecht" unterschieden werden soll.

Je nach Messgerätspezifikation und äußeren Anforderungen ist es auch möglich, die Kategorien in anderer Weise einzuteilen, so dass der Wertebereich einen größeren Messbereich oder einen engeren Messbereich umfasst. Die oben genannten Wertebereiche sind lediglich beispielhaft zu verstehen.

In einer weiteren Ausführungsform kann das Ausgeben der Meldung erfolgen, ob ein Wert des Qualitätsparameters innerhalb oder außerhalb des vorbestimmten Wertebereichs des Qualitätsparameters liegt. Je nach bestimmtem Wert des Qualitätsparameters kann erfindungsgemäß die entsprechende Kategorie zurückgegeben werden. Ferner kann vorgesehen sein, dass falls die Werte des Qualitätsparameters in eine Kategorie "schlecht" oder "sehr schlecht", d. h. außerhalb des vordefinierten Wertebereichs fallen, neben einer einfachen Angabe der Kategorie sowie des Wertes des Qualitätsparameters eine zusätzliche Warnmeldung ausgegeben wird.

In einer bevorzugten Weiterbildung der Erfindung kann vorgesehen sein, dass der Wertebereich einer Stufe einer vorbestimmten Kategorie entsprechen kann, wobei beim Wechsel von einem Bereich in einen anderen eine Umkategorisierung in der Auswerte-Elektronik erfolgt; und wobei bevorzugt eine Warnmeldung ausgegeben wird, wenn die Umkategorisierung eine Verschlechterung anzeigt. Die Warnmeldung kann optisch oder akustisch ausgegeben werden.

Ferner kann das Anzeigen der jeweiligen Werte oder Kategorien auf einer Anzeigeeinheit des Messgeräts vorgesehen sein: Dies kann realisiert werden indem die von der Datenverarbeitungseinheit bereitgestellten Werte der Qualitätsparameter ohne weiteres auf einem Display angezeigt werden.

Ein Benutzer wird hierdurch schnell und einfach informiert.

Durch das vorgenannte Verfahren wird ein Benutzer des Wirbelströmungsmessgerätes in die Lage versetzt, nicht beachtete Mindestanforderungen an die Einbaulage oder für das Gerät ungünstige Prozessbedingungen sofort an Hand des gemessenen Messsignals zu erkennen. Je nach ausgegebener Kategorie kann der Benutzer erkennen, ob die vorbestimmten Messgerätspezifikationen eingehalten werden und ob eine Messung in der gewünschten Genauigkeit möglich ist. Gegebenenfalls wird er durch die entsprechende Kategorie darauf hingewiesen, dass die Einbaulage bzw. die allgemeinen Prozessbedingungen genauer untersucht werden sollten. Die Störungen können effektiv und schnell beseitigt werden, wodurch die Messung vorteilhaft verbessert werden kann und ermöglicht hiernach eine exakte Bestimmung des Durchflusses des zu prüfenden Mediums.

Ferner bezieht sich die Erfindung auf ein Wirbelströmungsmessgerät gemäß Anspruch 5 zur Verwendung des vorstehenden Verfahrens, wobei das Wirbelströmungsmessgerät ein mit dem fluiden Medium durchströmtes Messrohr, einen in das Messrohr hineinragenden Staukörper sowie einen Wirbelsensor zur Erfassung eines durch die Kármán'schen Wirbel im strömenden Medium verursachten periodischen Druckschwankungen korrespondierenden Sensorsignals (S), aufweisen kann. Das Messgerät kann weiter eine Datenverarbeitungseinheit aufweisen, die zum einen mit dem Sensor, zum zweiten mit einer Anzeigeeinheit und zum Dritten mit einer Ausgabeeinheit operativ verbunden sein kann. Die Anzeigeeinheit kann dazu ausgebildet sein, die Werte des Qualitätsparameters, die Kategorien des Messbereichs, Warnmeldungen oder sonstige Meldungen anzuzeigen. Die Ausgabeeinheit kann dazu ausgebildet sein, elektrische Signale über Feldbusse einem Leitsystem zur Verfügung zu stellen.

Das Messgerät weist zur Durchführung der oben beschriebenen Auswertung des Messsignals insbesondere eine Auswerte-Elektronik auf, die neben der Datenverarbeitungseinheit auch eine mit dem Sensor verbundene Messschaltung oder eine separate Mess- und Regelungseinheit zur Erfassung und Berechnung des Messsignals umfassen kann. Die Datenverarbeitungseinheit zum Auslesen der berechneten Messdaten kann auch mit einem separaten Computer verbunden werden. Die zur Überwachung des Durchflusses benötigten Daten können hiermit schnell erfasst und weiterverarbeitet werden; sollte ein Fehler oder ein entsprechend schlechtes Messsignal auftreten, kann ein Benutzer zügig eingreifen.

Vorteilhaft kann das Messgerät ermöglichen, Messunsicherheiten, die durch Prozess- bzw. Installationsbedingungen stark beeinflusst werden, schnell und einfach zu erfassen. Dies muss bei anderen Messgeräten dagegen durch zusätzliche Messeinrichtungen erfolgen, oder wird gar nicht bemerkt. Lediglich eine Abweichung zwischen zwei Messgeräten weist auf eine Störung hin, die jedoch zumeist mit dem Messgerät selbst in Verbindung gebracht werden und nicht mit dessen Einbaulage oder jegliche diese umgebende Prozessbedingungen. Das Messgerät selbst kann vorteilhaft die erforderlichen Messgrößen erfassen, verarbeiten und dem Benutzer schnell und unkompliziert anzeigen. Der Benutzer wird effektiv über schlechte Messbedingungen informiert und kann entsprechend handeln.

## Patentansprüche

1. Verfahren zur Bestimmung der Qualität von Prozess- und Einbaubedingungen eines Wirbelströmungsmessgeräts in dem ein zumindest einphasiges Medium strömt, wobei das Wirbelströmungsmessgerät einen in das strömende Medium hineinragenden Staukörper und einen Wirbelsensor aufweist, welches Verfahren umfasst :
- Erzeugen von Kármán'schen Wirbeln im strömenden Medium zumindest im Bereich des Wirbelsensors mittels des Staukörpers, wobei die Wirbel mit einer von einer momentanen Strömungsgeschwindigkeit des strömen-den Mediums abhängigen Wirbelablösefrequenz (fᵥ) vom Staukörper abgelöst werden;
- Erfassen von durch die Kármán'schen Wirbel im strömenden Medium verursachten periodischen Druckschwankungen mittels des Wirbelsensors zum Erzeugen eines mit den Druckschwankungen korrespondierenden Sensorsignals (S)
- Selektieren einer Nutzsignalkomponente (M) mittels einer Datenverarbeitungseinheit aus dem Sensorsignal (S), die ein, die Wirbelablösefrequenz enthaltendes Frequenzband aufweist
- Verwenden der Nutzsignalkomponente (M) zur Bestimmung mindestens eines Qualitätsparameters, welcher ein für die Einbaubedingungen darstellt,
--wobei wenigstens ein Schwankungswert der Nutzsignalkomponente (M) über ein sich über mehrere Perioden der Druckschwankungen der Strömung erstreckendes Zeitintervall, nämlich eine Standardabweichung eines Amplitudenverlaufs der Nutzsignalkomponente und/oder eine Kurtosis (Ku) der Nutzsignalkomponente ermittelt und als Qualitätsparameter herangezogen wird
--und/oder wobei wenigstens ein Schwankungswert der in der Nutzsignalkomponente (M) enthaltenen Wirbelablöseperioden über ein Zeitintervall, welcher Schwankungswert eine relative Standardabweichung, eine Kurtosis oder eine Schiefe ist, ermittelt und als Qualitätsparameter verwendet wird;
- Vergleichen des Qualitätsparameters mit einem vorbestimmten Wertebereich des Qualitätsparameters; und
- Ausgeben einer akustischen oder optischen Meldung mittels einer an die Datenverarbeitungseinheit angeschlossenen Anzeigeeinheit und/oder Ausgeben eines elektrischen Signals, über eine an die Datenverarbeitungseinheit angeschlossene Ausgabeeinheit, falls mindestens ein Wert des Qualitätsparameters innerhalb oder außerhalb des vorbestimmten Wertebereichs liegt.

2. Verfahren nach einem der vorherigen Ansprüche, weiters umfassend: wenigstens einen Qualitätsparameter zur Bestimmung und Anzeige der Messunsicherheit der Wirbelablösefrequenz fᵥ.

3. Verfahren nach einem der vorherigen Ansprüche, weiters umfassend: einen Wertebereich des Qualitätsparameters entsprechend einer Stufe einer vorbestimmten Kategorie, wobei beim Wechsel von einem Bereich in einen anderen eine Umkategorisierung in der Datenverarbeitungseinheit erfolgt; und wobei bevorzugt eine Warnmeldung ausgegeben wird, wenn die Umkategorisierung eine Verschlechterung anzeigt.

4. Verfahren nach einem der vorherigen Ansprüche, weiters umfassend: Ausgeben des bestimmten Qualitätsparameters als skaliertes Signal zur Beurteilung der momentan vorherrschenden Messunsicherheit über die Ausgabeeinheit und/oder Anzeigeeinheit.

5. Wirbelströmungsmessgerät zur Verwirklichung eines Verfahrens gemäss eines der vorherigen Ansprüche, welches Wirbelströmungsmessgerät umfasst:
einen Staukörper zum Erzeugen von Kármán'schen Wirbeln in einem strömenden Medium;
einen Wirbelsensor zum Erfassen von durch Kármán'schen Wirbel im strömenden Medium verursachten periodischen Druckschwankungen und zum Erzeugen eines mit den Druckschwankungen korrespondierenden Sensorsignals (S); sowie
eine mit dem Wirbelsensor im Informationsaustausch stehende Datenverarbeitungseinheit, die dafür eingerichtet ist, basierend auf dem Sensorsignal (S) wenigstens einen den Prozess- und Einbaubedingungen repräsentierenden Qualitätsparameter zu generieren durch
- Selektieren einer Nutzsignalkomponente (M) aus dem Sensorsignal (S), die ein die Wirbelablösefrequenz enthaltendes Frequenzband aufweist;
- Verwenden der Nutzsignalkomponente (M) zur Bestimmung des Qualitätsparameters,
--wobei wenigstens ein Schwankungswert der Nutzsignalkomponente (M) über ein sich über mehrere Perioden der Druckschwankungen der Strömung erstreckendes Zeitintervall, nämlich eine Standardabweichung eines Amplitudenverlaufs der Nutzsignalkomponente und/oder eine Kurtosis (Ku) der Nutzsignalkomponente ermittelt und als Qualitätsparameter herangezogen wird
--und/oder wobei wenigstens ein Schwankungswert der in der Nutzsignalkomponente (M) enthaltenen Wirbelablöseperioden über ein Zeitintervall, welcher Schwankungswert eine relative Standardabweichung, eine Kurtosis oder eine Schiefe ist, ermittelt und als Qualitätsparameter verwendet wird;
sowie eine mit der Datenverarbeitungseinheit operativ verbundene Anzeigeeinheit und Ausgabeeinheit, auf denen eine Warnmeldung elektrisch, akustisch und oder optisch angezeigt werden kann, falls mindestens ein Wert des Qualitätsparameters innerhalb oder außerhalb eines vorbestimmten Wertebereichs liegt oder der Qualitätsparameter selbst als skalierte Grösse für die momentan vorherrschende Messunsicherheit des Wirbelströmungsmessgerätes ausgegeben werden kann.

## Claims

1. Procedure for determining the quality of process and installation conditions of a vortex flowmeter in which a medium, which is at least single-phase, flows, wherein said vortex flowmeter features a bluff body projecting into the flowing medium and a vortex sensor, said procedure comprising:
- The generation of Karman vortices in the flowing medium, at least in the area of the vortex sensor, by means of the bluff body, wherein the vortices are shed by the bluff body at a vortex shedding frequency that depends on a current flow velocity of the flowing medium;
- The measurement of periodic pressure fluctuations, caused by the Karman vortices in the flowing medium, using the vortex sensor for the generation of a sensor signal (S) that corresponds to the pressure fluctuations
- The selection of a useful signal component (M), using a data processing unit, from the sensor signal (S), which has a frequency band containing the vortex shedding frequency;
- The use of the useful signal component (M) to determine at least one quality parameter, which represents an indicator for the installation conditions;
-- wherein at least one fluctuation value of the useful signal component (M) is determined over a time interval extending over several periods of pressure fluctuations of the flow, particularly a standard deviation of an amplitude curve of the useful signal component and/or a kurtosis (Ku) of the useful signal component, said value being utilized as a quality parameter
-- and/or wherein at least one fluctuation value of the vortex shedding periods contained in the useful signal component (M) is determined over a time interval, said fluctuation value being a relative standard deviation, a kurtosis or a skew, and is used as a quality parameter;
- The comparison of the quality parameter with a predefined value range of the quality parameter; and
- The transmission of an acoustic or optical message using a display unit connected to the data processing unit, and/or the outputting of an electrical signal via an output unit connected to the data processing unit, if at least one value of the quality parameter is within or outside the predefined value range.

2. Procedure as claimed in one of the previous claims, further comprising: at least a quality parameter designed to determine and display the measuring uncertainty of the vortex shedding frequency fᵥ.

3. Procedure as claimed in one of the previous claims, further comprising: a value range of the quality parameter corresponding to a level of a predefined category, wherein when there is a change from one range to another, a recategorization takes place in the data processing unit; and wherein a warning message is preferably generated if the recategorization indicates a deterioration.

4. Procedure as claimed in one of the previous claims, further comprising: the outputting of the determined quality parameter as a scaled signal for the purpose of evaluating the measuring uncertainty currently present via the output unit and/or display unit.

5. Vortex flowmeter designed to carry out a procedure as claimed in one of the previous claims, said vortex flowmeter comprising:
a bluff body designed to generate Karman vortices in a flowing medium;
a vortex sensor designed to measure periodic pressure fluctuations caused by Karman vortices in the flowing medium, and designed to generate a sensor signal (S) corresponding to the pressure fluctuations; as well as a data processing unit engaged in the exchange of information with the vortex sensor, said unit being designed to generate, on the basis of the sensor signal (S), at least one quality parameter representing the process and installation conditions, by
- selecting a useful signal component (M) from the sensor signal (S), said component having a frequency band that contains the vortex shedding frequency;
- utilizing the useful signal component (M) to determine the quality parameter;
-- wherein at least a fluctuation value of the useful signal component (M) is determined over a time interval extending over multiple periods of pressure fluctuations of the flow, particularly a standard deviation of an amplitude curve of the useful signal component and/or a kurtosis (Ku) of the useful signal component, said value being used as a quality parameter
-- and/or wherein at least a fluctuation value of the vortex shedding periods contained in the useful signal component (M) is determined over a time interval,
said fluctuation value being a relative standard deviation, a kurtosis or a skew, and is used as a quality parameter;
as well as
a display unit and output unit that is connected in an operational manner to the data processing unit, wherein a warning message can be displayed electrically, acoustically or optically on said units if at least one value of the quality parameter is within or outside a predefined value range, or the quality parameter itself can be output as a scaled variable for the current measuring uncertainty of the vortex flowmeter.

## Revendications

1. Procédé destiné à la détermination de la qualité des conditions de process et de montage d'un débitmètre vortex dans lequel s'écoule un produit au moins monophasique, le débitmètre vortex comportant un corps de retenue et un capteur vortex s'étendant dans le produit en écoulement, lequel procédé comprend :
- La génération de tourbillons de Karman dans le produit en écoulement, au moins dans la zone du capteur vortex, au moyen du corps de retenue, les tourbillons étant détachés du corps de retenue à une fréquence de détachement des tourbillons dépendant de la vitesse d'écoulement momentanée du produit en écoulement ;
- La mesure de fluctuations de pression périodiques, occasionnées par les tourbillons de Karman dans le produit en écoulement, au moyen du capteur vortex pour la génération d'un signal de capteur (S) correspondant aux fluctuations de pression
- La sélection d'une composante de signal utile (M) au moyen d'une unité de traitement de données à partir du signal de capteur (S), laquelle composante présente une bande de fréquence contenant la fréquence de détachement des tourbillons ;
- L'utilisation de la composante de signal utile (M) pour la détermination d'au moins un paramètre qualité, qui représente une mesure pour les conditions de montage ;
-- au moins une valeur de fluctuation de la composante de signal utile (M) étant déterminée sur un intervalle de temps s'étendant sur plusieurs périodes des fluctuations de pression de l'écoulement, notamment un écart-type d'une courbe d'amplitude de la composante de signal utile et/ou un kurtosis (Ku) de la composante de signal utile, laquelle valeur est utilisée comme paramètre qualité
-- et/ou au moins une valeur de fluctuation des périodes de détachement de tourbillons contenues dans la composante de signal utile (M) étant déterminée sur un intervalle de temps, laquelle valeur de fluctuation est un écart-type relatif, un kurtosis ou une inclinaison, et est utilisée en tant que paramètre qualité ;
- La comparaison du paramètre qualité avec une plage de valeurs prédéfinie du paramètre qualité ; et
- L'émission d'un message acoustique ou optique au moyen d'une unité d'affichage raccordée à l'unité de traitement de données et/ou l'émission d'un signal électrique via une unité d'affichage raccordée à l'unité de traitement de données, dans le cas où une valeur du paramètre qualité se situe à l'intérieur ou à l'extérieur de la plage de valeurs prédéfinie.

2. Procédé selon l'une des revendications précédentes, comprenant en outre : au moins un paramètre qualité destiné à la détermination et à l'affichage de l'incertitude de mesure de la fréquence de détachement des tourbillons fᵥ.

3. Procédé selon l'une des revendications précédentes, comprenant en outre : une plage de valeurs du paramètre qualité conformément à un niveau d'une catégorie prédéfinie, un changement de catégorie s'opérant dans l'unité de traitement de données en cas de passage d'une plage à une autre ; et un message d'avertissement étant de préférence émis lorsque le changement de catégorie affiche une détérioration.

4. Procédé selon l'une des revendications précédentes, comprenant en outre : l'émission du paramètre qualité déterminé en tant que signal mis à l'échelle en vue de l'évaluation de l'incertitude de mesure momentanément dominante via l'unité de sortie et/ou l'unité d'affichage.

5. Débitmètre vortex destiné à la réalisation d'un procédé selon l'une des revendications précédentes, lequel débitmètre vortex comprend :
un corps de retenue destiné à la génération de tournillons de Karman dans un produit en écoulement ;
un capteur vortex destiné à la mesure de fluctuations de pression périodiques occasionnées par les tourbillons de Karman dans le produit en écoulement, et destiné à la génération d'un signal de capteur (S) correspondant aux fluctuations de pression ; ainsi que
une unité de traitement de données échangeant des informations avec le capteur vortex, laquelle unité est conçue de telle sorte à générer, sur la base du signal de capteur (S), au moins un paramètre qualité représentant les conditions de process et de montage, par
- La sélection d'une composante de signal utile (M) à partir du signal de capteur (S), laquelle composante présente une bande de fréquence contenant la fréquence de détachement des tourbillons ;
- L'utilisation de la composante de signal utile (M) pour la détermination du paramètre qualité ;
-- au moins une valeur de fluctuation de la composante de signal utile (M) étant déterminée sur un intervalle de temps s'étendant sur plusieurs périodes des fluctuations de pression de l'écoulement, notamment un écart-type d'une courbe d'amplitude de la composante de signal utile et/ou un kurtosis (Ku) de la composante de signal utile, laquelle valeur est utilisée comme paramètre qualité
-- et/ou au moins une valeur de fluctuation des périodes de détachement de tourbillons contenues dans la composante de signal utile (M) étant déterminée sur un intervalle de temps, laquelle valeur de fluctuation est un écart-type relatif, un kurtosis ou une inclinaison, et est utilisée en tant que paramètre qualité ;
ainsi que
une unité d'affichage et une unité de sortie, reliées de manière opérationnelle avec l'unité de traitement de données, unités sur lesquelles peut être émis par voie électrique, acoustique et/ou optique un message d'avertissement, dans le cas où une valeur du paramètre qualité se situe à l'intérieur ou à l'extérieur d'une plage de valeurs prédéfinie, ou unités sur lesquelles le paramètre qualité peut être émis en tant que grandeur mise à l'échelle pour l'incertitude de mesure momentanément dominante du débitmètre vortex.
